# EUROPEAN PATENT SPECIFICATION

(11) **EP 4 561 902 B1**
(45) Date of publication and mention of the grant of the patent: **29.07.2026**
(21) Application number: 23748530.5
(22) Date of filing: 28.07.2023
(51) Int. Cl.: B64D 27/34, B64D 27/35, B64D 27/357, H02J 1/082, H02J 9/06, H02J 1/10

(54) **AN ENERGY DISTRIBUTION SYSTEM**
ENERGIEVERTEILUNGSSYSTEM
SYSTÈME DE DISTRIBUTION D'ÉNERGIE

(30) Priority: 29.07.2022 SE 2250933
(43) Date of publication of application: 04.06.2025
(73) Proprietor: Heart Aerospace AB, 417 55 Göteborg (SE)
(72) Inventor: AGUILERA MEDINA, Luis Antonio, 414 81 Göteborg (SE); BASSEM, Farag, 425 34 Hisings Kärra (SE); DE OLIVEIRA SPIGOLON, Fabrício, 442 39 Kungälv (SE)
(74) Representative: Murgitroyd & Company
(86) International application number: PCT/EP2023/071016
(87) International publication number: WO 2024/023305

(56) References cited:
- EP-A1- 3 657 468
- GB-A- 2 576 250
- US-A1- 2010 080 027
- US-A1- 2020 140 101
- US-A1- 2021 024 223

## Description

### TECHNICAL FIELD

The present disclosure relates to an energy distribution system configured to create a common DC bus on an aircraft having enhanced stability. It further relates to an aircraft comprising the energy distribution system.

### BACKGROUND

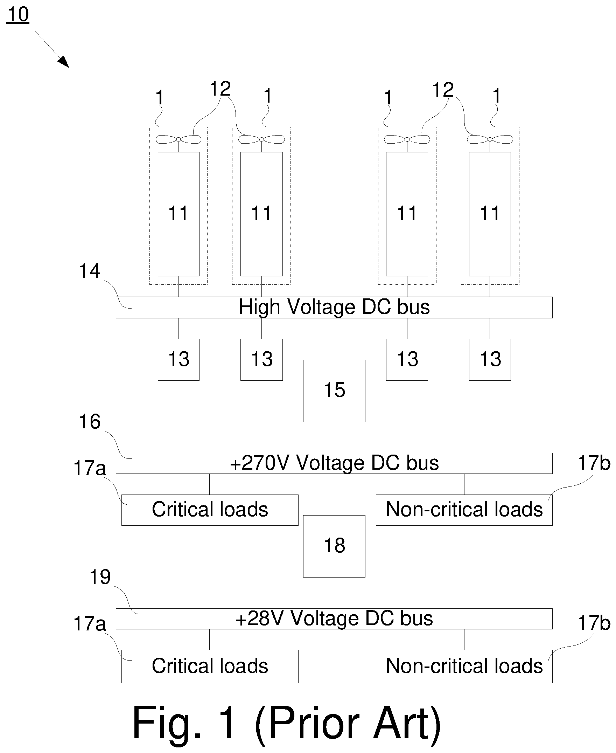

The essential systems in an electric aircraft rely on a continuous supply of electric power and energy to function properly. This may be achieved with multiple redundant energy sources for each system, or by one or more common direct current (DC) buses to distribute energy to critical systems. Figure 1 shows a prior art system where a common high voltage DC bus is used to power the propulsion units and a DC/DC converter is provided to create a common low voltage DC bus from which critical and non-critical loads are powered.

A drawback with the prior art system is that the DC voltage on the common low voltage DC bus may experience voltage spikes or even shut down if the common high voltage DC bus fails to energize the common low voltage DC bus.

Thus, there is a need for a more stable and secure supply of energy to energize a low voltage DC bus.

FIG. 1 in US2010080027A1 illustrates a related art electric power system for an aircraft. The electric power system includes generator 10, generator control unit (GCU) 15, External Power Connection (EPC) DC ground cart interface 40, high voltage battery 20, low voltage battery 30, DC-DC converter 50 and inverter 60.

Figure 8 in EP3657468A1 is a schematic of a series hybrid drive configuration 800. The powertrain includes two electric propulsors 801, each powered by two electric motors 802, two battery packs as rechargeable storage units 803, and a single range-extending generator. The generator couples a single internal combustion engine 804 coupled with two motor generators 805. Power is delivered to each of the propulsors 801 by one of two primary buses 806, each of which is powered by one of the two battery packs 803, and one of the two motor generators 805. The primary buses 806 also distribute power to the non-propulsion sub-systems of the aircraft 810, via step-down DC-DC convertors 807. A third vital bus 808 re-routes power to accommodate failures of any of the electric motors, distribution buses, battery packs or generator. The vital bus 808 also re-routes power to the non-propulsion sub-systems 810 and avionics 812 in the event of failure of a primary bus 806 or one of the step-down DC-DC convertors 807.

FIG. 5 in US2021024223A1 shows an electrical architecture 5 in which sources 11 of electrical energy comprise two rechargeable electrical energy storage devices 52 and electrical power generation advice 51. The electrical architecture 5 also includes contactors 15 arranged respectively between each source 11 of electrical energy and main electricity network 20. The electrical architecture 5 also includes a secondary electricity network 25 and a converter device 54. The converter device 54 is electrically connected to the main electricity network 20 and to the secondary electricity network 25.

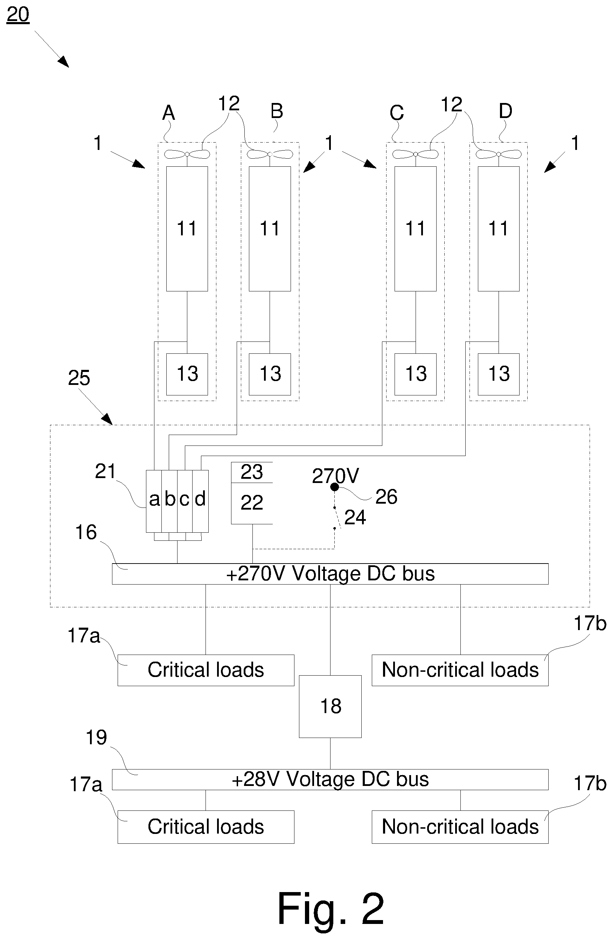

FIG. 2 in US2020140101A1 illustrates a circuit diagram of an electric circuit included in an energy storage system 100 for an aircraft. The system 100 illustrated in FIG. 2 includes battery management system 102, propulsion power bus 106, a battery charge input 207 to receive a charge from a ground-based charger (not shown), non-critical bus 108, engine starter bus 112, and critical bus 110. In addition, the system 100 illustrated in FIG. 2 includes a first DC-DC converter 202 for the propulsion power bus 106 and the battery charge input 107, a second DC-DC converter 204 for the non-critical bus 108 and the engine starter bus 112, a third DC-DC converter 206 for an energy storage system controller 214 (ESS controller), a fourth DC-DC converter 208 for the critical bus 110, a fifth DC-DC converter 210 for supplying backup battery power to the ESS controller 214, a sixth DC-DC converter 212 for supplying backup battery power to the critical bus 110, and two corresponding backup batteries 216 and 218.

GB2576250A discloses an aircraft comprising an energy battery electrically connected to cruise propellers and a power battery electrically connected to lifting propellers. A reserve battery may be connected in parallel to the power battery, to assist supplying the lifting rotors during take-off and landing.

### SUMMARY

An object of the present disclosure is to provide an energy distribution system which seeks to mitigate, alleviate, or eliminate one or more of the above-identified deficiencies in the art and disadvantages singly or in any combination.

This object is obtained by an energy distribution system according to claim 1.

An advantage with the present invention is that a more stable low voltage DC bus may be obtained compared to prior art solutions since the DC bus battery also helps on transients.

Another advantage with the present invention is that emergency power may be obtained by the DC bus battery in case the energy storage units fail to energize the DC bus.

Further aspects and advantages may be obtained from the detailed description.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 shows an energy distribution system for providing a low voltage DC bus in an aircraft according to prior art;
Figure 2 shows an energy distribution system for providing a low voltage DC bus in an aircraft according to a first example not as set out in claim 1;
Figure 3 shows an energy distribution system for providing multiple low voltage DC buses in an aircraft according to a second example embodiment;
Figure 4 shows an energy distribution system for providing multiple low voltage DC buses in an aircraft according to a third example embodiment;
Figure 5 shows an energy distribution system with a control unit for providing low voltage DC buses according to a fourth embodiment; and
Figure 6 is a flowchart illustrating a method to energize the low voltage DC buses.

### DETAILED DESCRIPTION

Aspects of the present disclosure will be described more fully hereinafter with reference to the accompanying drawings. The system disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

Some of the example embodiments presented herein are directed towards an energy distribution system intended to be used in an aircraft, such as an aeroplane (airplane), helicopter, or other machine capable of flight.

Figure 1 shows an energy distribution system 10 for providing a low voltage DC bus in an aircraft according to prior art. In this aspect, the wording "low voltage DC bus" is exemplified as a 270V DC bus that may be used to power critical and non-critical loads in an aircraft. Other voltages may be used depending on the actual implementation of system components.

In figure 1, the energy distribution system 10 comprises four propulsion units 1 powered by four energy storage units 13 via a common high voltage DC bus 14. Each propulsion unit 1 comprises a drive unit 11 (with an alternate current, AC, electric motor that receives power via a DC/AC inverter from the common high voltage DC bus 14) and a propeller 12. The energy storage units 13 may comprise rechargeable batteries or battery packs. The voltage on the common high voltage DC bus 14 varies, as an example between 480- 800 VDC, depending on state of charge and the power demand from the connected propulsion units 1.

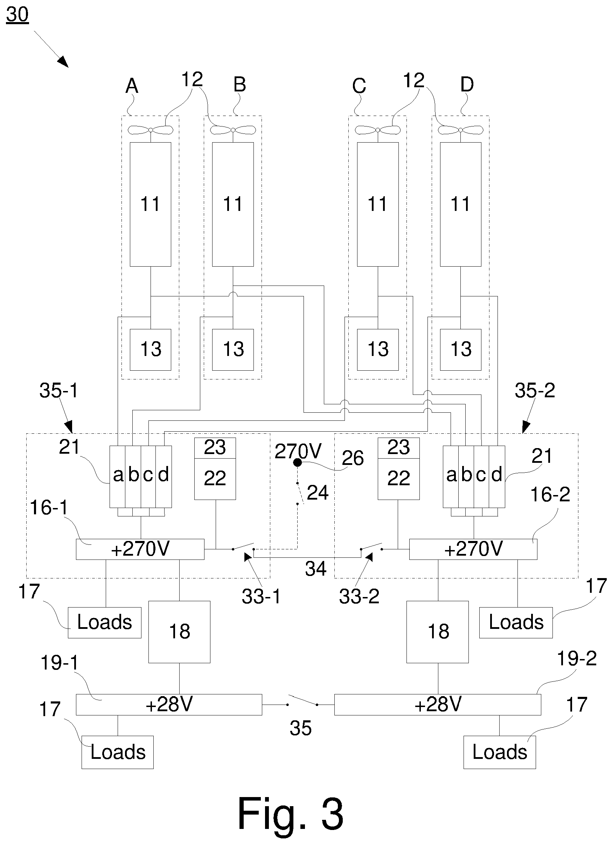

A DC/DC converter 15 is provided to energize a common 270VDC bus 16, which supplies power to critical loads 17a and non-critical loads 17b that operates on 270VDC. A further DC/DC converter 18 is provided to energize a common 28VDC bus 19 that supplies power to critical loads 17a and non-critical loads 17b that operate on 28VDC. Loads are commonly denoted 17, as in figures 3, and include both critical and non-critical loads.

Figure 2 shows an energy distribution system 20 for providing a low voltage DC bus, e.g. 270VDC, in an aircraft according to a first example not as set out in claim 1. The energy distribution system comprises a plurality of powertrain units, in this example four powertrain units A, B, C and D. Each powertrain unit comprises a propulsion unit 1 and an energy storage unit 13. The propulsion unit 1 comprises a drive unit 11 and a propeller 12. with the drive unit 11 comprises an alternate current (AC) electric motor and a DC/AC inverter. The DC/AC inverter receives DC power from the energy storage unit 13 and provides AC power to the electric motor. In some examples, the electric motor is an induction motor and the DC/AC inverter is a variable frequency inverter. The energy storage unit 13 is configured to supply a first direct current, DC, voltage via a DC connection to the drive unit 11 in the propulsion unit. The first DC voltage supplied by the energy storage unit 13 in each powertrain unit varies depending on state of charge and the power demand from the connected propulsion unit, and as an example the first DC voltage may vary between 480-800 VDC.

The energy distribution system 20 further comprises a converter unit 25 configured to energize a DC bus 16 having a lower DC voltage, e.g. 270 VDC, than the first DC voltage, e.g. 480-800 VDC, provided from each respective energy storage unit 13. The converter unit 25 comprises: a DC/DC converter arrangement 21 configured to convert the first DC voltage from each energy storage unit 13 to a second DC voltage on the DC bus 16; and a DC bus battery 22 with a nominal operating DC voltage of the second DC voltage.

The energy distribution system may comprise an external input 26 configured to provide energy to the DC bus 16 using an external connection when the aircraft is on the ground, provided a switch 24 is closed. The switch 24 may be controlled by a controller (not shown) or be a manually activated switch.

The DC/DC converter arrangement 21 comprises four separate DC/DC converters a-d, one for each energy storage unit 13. The energy storage unit of powertrain "A" is connected to DC/DC converter "a", the energy storage unit of powertrain "B" to DC/DC converter "b", and so on. The output from the separate DC/DC converters a-d are jointly connected to the DC bus 16.

The DC bus battery 22 is controlled by a battery management unit (BMU) 23 that is powered by the DC bus battery 22 through an internal DC/DC converter inside the DC bus battery 22. Furthermore, the DC bus battery 22 may be configured to power up the DC bus 16 when starting the aircraft.

The DC bus 16 provides energy for critical loads 17a and non-critical loads 17b that operates on 270VDC, as well as providing energy for charging the DC bus battery 22 when energized from the energy storage units 13. The DC bus battery 22 is also configured to supply energy to the DC bus 16 when the energy storage units 13 fail to energize the DC bus 16 through DC/DC converter arrangement 21. This may occur due to depletion of charge in the energy storage unit 13. Furthermore, the DC bus battery also helps to provide a stable DC voltage level if voltage spikes, or sudden surges occur from the connected loads 17. A further DC/DC converter 18 is in this embodiment provided to energize a common 28VDC bus 19 that supplies power to critical loads 17a and non-critical loads 17b that operate on 28VDC.

Figure 3 shows an energy distribution system 30 for providing multiple low voltage DC buses, e.g. 270 VDC, in an aircraft according to a second example embodiment. The energy distribution system 30 differs from the system described in connection with figure 2 in one major aspect. Instead of using one converter unit 25, the energy distribution system 30 comprises two converter units, a first converter unit 35-1 and a second converter unit 35-2 and each converter unit is configured to energize a separate DC bus 16-1, 16-2. In some embodiments, first converter unit 35-1 is identical to second converter unit 35-2.

Each converter unit 35-1, 35-2 comprises a DC/DC arrangement 21 to energize the separate DC bus 16 and a DC bus battery 22 with a BMU 23. Furthermore, each converter unit 35-1, 35-2 also comprises a switch 33-1 and 33-2, respectively, which together are used to connect the separate DC buses with each other via an interconnection 34.

The energy distribution system 30 may comprise an external input 26 configured to provide energy to the DC buses 16-1, 16-2 using an external connection when the aircraft is on the ground, provided switches 24 and 33 are closed. The switches 24 and 33 may be controlled by a controller (not shown) and/or be manually activated switches.

In this embodiment, each DC/DC converter arrangement 21 comprises a separate DC/DC converter a-d for each energy storage unit 13 and each energy storage unit 13 is connected to two independent DC/DC converter arrangements 21 .

Each DC bus 16-1, 16-2 provides energy for loads 17 (which may be critical loads and/or non-critical loads) that operate on 270VDC, as well as providing energy for charging each DC bus battery 22 when energized from the energy storage units 13 via the DC/DC converters a-d. The DC bus battery 22 is also configured to supply energy to each DC bus 16 when the energy storage units 13 fail to energize the DC bus 16-1, 16-2 through DC/DC converter arrangement 21. Furthermore, the DC bus battery also helps to provide a stable DC voltage level if voltage spikes, or sudden surges occur from the connected loads 17. A separate DC/DC converter 18 is in this embodiment connected to each 270V DC bus 16 to energize a separate 28VDC bus 19-1 and 19-2 that supplies power to loads 17 (which may be critical loads and/or non-critical loads) that operate on 28VDC. A switch 35 is provided between the 28VDC buses to create a common 28VDC bus when closed. The switch 34 may be controlled by a controller (not shown) and/or be a manually activated switch.

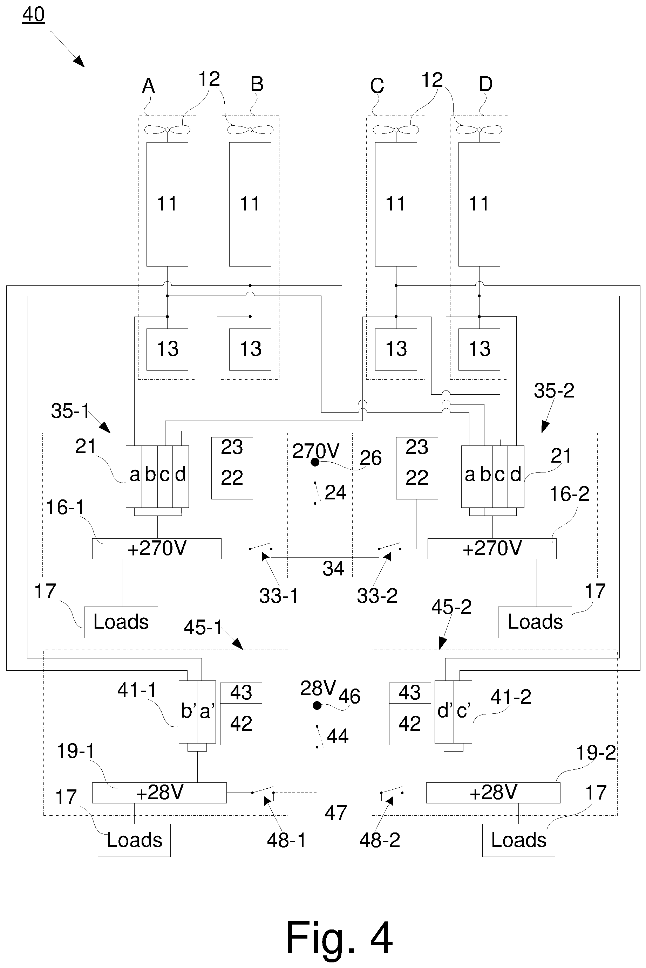

Figure 4 shows an energy distribution system 40 for providing multiple low voltage DC buses, e.g. 270 VDC and/or 28VDC, in an aircraft according to a third example embodiment. The energy distribution system 40 differs from the system described in connection with figure 3 in one major aspect. Instead of using separate DC/DC converters 18 to energize the 28VDC buses 19-1, 19-2 from each 270VDC bus 16-1, 16-2, the energy distribution 40 comprises two additional converter units, a first converter unit 45-1 and a second converter unit 45-2 which are configured to energize each DC bus 19-1, 19-2.

Each additional converter unit 45-1, 45-2 comprises a DC/DC arrangement 41-1, 41-2 to energize each 28VDC bus 19-1, 19-2 and a low voltage DC bus battery 42 with a BMU 43. Furthermore, each converter unit 45-1, 45-2 also comprises a switch 48-1 and 48-2, respectively, which together are used to connect the separate 28VDC buses with each other via an interconnection 47.

The energy distribution system 40 may further comprise an external input 46 configured to provide energy to the DC buses 19-1, 19-2 using an external connection when the aircraft is on the ground, provided switches 44 and 48-1, 48-2 are closed. The switches 44 and 48 may be controlled by a controller (not shown) and/or be manually activated switches.

In this embodiment, the first DC/DC converter arrangement 41-1 comprises separate DC/DC converters a' and b' connected to two energy storage units 13 in powertrain units A and B and the second DC/DC converter arrangement 41-2 comprises separate DC/DC converters c' and d' connected to two energy storage units 13 in powertrain units C and D.

Each DC bus 19 provides energy for loads 17 (which may be critical loads and/or non-critical loads) that operate on 28VDC, as well as providing energy for charging each low voltage DC bus battery 42 when energized from the energy storage units 13. The low voltage DC bus battery 42 is also configured to supply energy to each 28VDC bus 19-1, 19-2 when the energy storage units 13 fail to energize the 28VDC bus 19-1, 19-2. Furthermore, the low voltage DC bus battery also helps to provide a stable 28VDC voltage level if voltage spikes, or sudden surges occur from the connected loads 17.

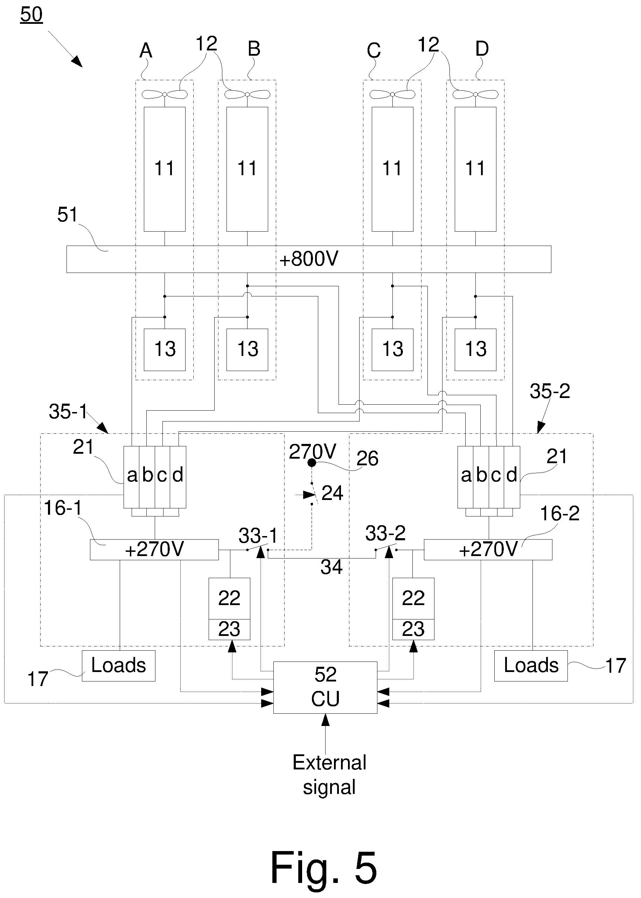

Figure 5 shows an energy distribution system 50 for providing a low voltage DC bus, e.g. 270 VDC, in an aircraft according to a fourth example embodiment. The energy distribution system 50 differs from the system described in connection with figure 4 in one major aspect. The propulsion units 11, 12 are connected to a common high voltage DC bus 51, and the energy storage units 13 are connected to energize the common high voltage DC bus 51, which have a voltage that may vary between 480-800 VDC. A common high voltage DC bus may be included in any of the previous described embodiments without deviating from the inventive concept. Also, the 28VDC buses are omitted in Figure 5.

In addition, Figure 5 illustrates a control unit 52 configured to control the switches 33-1, 33-2 and optionally switch 24. The control unit 52 may also be configured to control the additional switches 44, 48-1 and 48-2 arranged in relation to the 28VDC buses in Figure 4. The control unit 52 monitors the status of the DC/DC converters 21 and senses the voltage level of each 270VDC bus 16-1, 16-2 via a voltage sensor (not shown). If any of the voltage sensors indicate a drop in voltage level, or the monitored status of the DC/DC converters will affect the voltage level of the DC bus, the DC bus battery 22 may be used to energize the DC bus and also to stabilize the voltage level in case there is a disturbance, e.g. voltage spikes, surges. In addition, the control unit 52 may interconnect the low voltage DC buses by closing the switches 33-1, 33-2 if one of the low voltage DC buses experiences a drop in voltage level. The control unit may also be controlled by an external signal, e.g. from the pilot or the flight control computer, if needed.

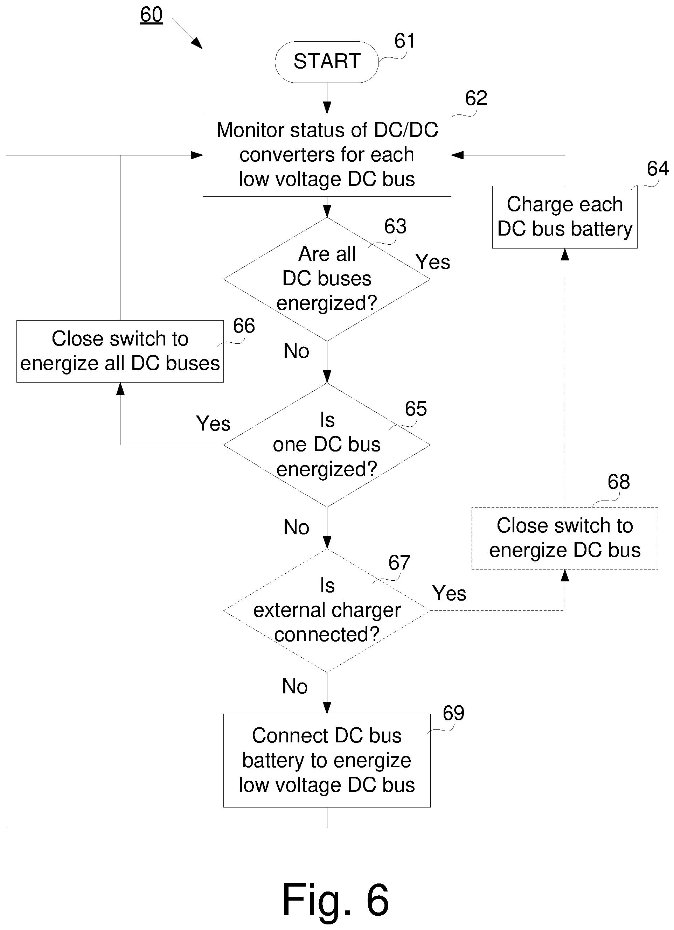

Figure 6 is a flow chart 60 illustrating an example embodiment of the operation that may be performed by the control unit 52 in Figure 5. The flow starts in 61, and in step 62 the control unit monitors the status of each low voltage DC bus to determine whether all low voltage DC buses are energized. In some embodiments, this is done by monitoring the status of the DC/DC converters. In some embodiments, determining whether each low voltage DC bus is energized includes sensing the voltage level of each low voltage DC bus. In some embodiments, a combination of monitoring the status of the DC/DC converters and sensing the DC bus voltage is performed. If all DC/DC converters are operational and all low voltage DC buses are energized, step 63, the flow returns to step 62 via step 63, indicating that each DC bus battery is charged while each low voltage DC bus is energized. However, if the control unit detects that one of the low voltage DC buses is non-energized the flow continues to step 65. If one of the low voltage DC buses is energized, step 65, the control unit closes the interconnecting switches 33-1, 33-2 to energize the other low voltage DC bus, step 66. If no DC bus is energized, the flow continues to step 69, where each low voltage DC bus is energized from its associated DC bus battery. The flow is thereafter fed back to step 62.

The flow chart also comprises an optional step 67 between step 65 and step 69, if the system comprises an external charger that is connected with a nominal voltage adapted to the voltage level of the low voltage buses, step 67, the flow continues to step 68 in which the charging switch 24 and one or both the interconnecting switches 33-1 and 33-2 are closed to energize one or both of the DC buses. The flow is thereafter fed back to step 62 via step 64.

In the drawings and specification, there have been disclosed exemplary aspects of the disclosure. However, many variations and modifications can be made to these aspects without departing from the scope of the appended claims. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. It should be appreciated that the example embodiments presented herein may be practiced in any combination with each other as far as they fall within the scope of the appended claims.

## Claims

1. An energy distribution system (20; 30; 40; 50) for an aircraft, wherein the energy distribution system (20; 30; 40; 50) comprises:
at least two electrical powertrain units (A-D), each powertrain unit comprises a propulsion unit (1) powered by one or more energy storage units (13) of the energy distribution system, each energy storage unit is configured to supply a first direct current, DC, voltage via a DC connection to the propulsion unit, the first DC voltage supplied by the energy storage unit (13) in each powertrain unit varies depending on state of charge and the power demand from the connected propulsion unit (1);
at least one converter unit (25; 35-1, 35-2; 45-1, 45-2) configured to energize a DC bus (16-1, 16-2; 19-1, 19-2) of the energy distribution system, the DC bus (16-1, 16-2; 19-1, 19-2) having a second DC voltage lower than the first DC voltage provided from each respective energy storage unit (13), each converter unit of the at least one converter unit (25; 35-1, 35-2; 45-1, 45-2) comprises:
- a DC/DC converter arrangement (21; 41-1, 41-2) configured to convert the first DC voltage from at least one of the energy storage units (13) to the second DC voltage on the DC bus (16-1, 16-2; 19-1, 19-2); and
- a DC bus battery (22; 42) with a nominal operating DC voltage of the second DC voltage;
wherein the DC bus (16-1, 16-2; 19-1, 19-2) provides energy for charging the DC bus battery (22; 42) when energized from the at least one energy storage unit (13), and the DC bus battery (22; 42) supply energy to the DC bus (16-1, 16-2; 19-1, 19-2) when the at least one energy storage unit fails to energize the DC bus (16-1, 16-2; 19-1, 19-2),
wherein the at least one converter unit comprises a first converter unit (35-1; 45-1) and a second converter unit (35-2; 45-2), each converter unit is configured to energize a separate DC bus (16-1, 16-2; 19-1, 19-2), and
wherein the separate DC buses (16-1, 16-2; 19-1, 19-2) are configured to be connected via one or more switches (33-1, 33-2; 48-1, 48-2).

2. The energy distribution system according to claim 1, further comprising an external input (26; 46) configured to provide energy to the DC bus (16-1, 16-2; 19-1, 19-2) of each converter unit (25, 35-1, 35-2; 45-1, 45-2) via one or more switches (24, 33-1, 33-2; 44, 48-1, 48-2).

3. The energy distribution system according to any of claims 1-2, wherein each DC/DC converter arrangement (21; 41-1, 41-2) comprises a separate DC/DC converter (a-d; a'-d') for each of the at least one energy storage unit (13).

4. The energy distribution system according to claim 3, wherein each of the at least one energy storage unit (13) is connected to two independent DC/DC converter arrangements (21).

5. The energy distribution system according to any of claims 1-4, wherein the DC bus battery (22; 42) is controlled by a battery management unit (23; 43) powered by the DC bus battery (22; 42).

6. The energy distribution system according to claim 5, wherein the DC bus battery (22; 42) is configured to power up the DC bus (16-1, 16-2; 19-1, 19-2) when starting the aircraft.

7. The energy distribution system according to any of claims 1-4, wherein each propulsion unit comprises a DC/AC inverter, an electric motor, and a propeller (12).

8. The energy distribution system according to any of the proceeding claims, wherein the DC/DC converter arrangement (21) is configured to convert the first DC voltage from each of the energy storage units (13) to the second DC voltage on the DC bus (16-1, 16-2).

9. The energy distribution system according to any of claims 1-8, wherein each propulsion unit (1) is powered by one energy storage unit (13).

10. The energy distribution system according to any of claims 1-8, wherein each propulsion unit (1) is powered by the energy storage units (13) via a common DC bus (51).

11. The energy distribution system according to any one of the proceeding claims, further comprising a control unit (52) configured to:
- monitor the status of DC/DC converters converting the first DC voltage to the second DC voltage when energizing the DC bus;
- if the DC/DC converters are operational, then charge each DC bus battery via the DC bus; and
- if one DC bus is non-energized, then connect the DC bus battery to energize the DC bus,
wherein at least one DC/DC converter is detected to malfunction, and the control unit is further configured to connect an energized DC bus with a non-energized DC bus by closing said one or more switches.

12. The energy distribution system according to any one of the proceeding claims, wherein the energy distribution system further comprises a control unit (52) configured to monitor the status of DC/DC converters and senses the voltage level of each DC bus via a voltage sensor, wherein if any of the voltage sensors indicate a drop in voltage level, or the monitored status of the DC/DC converters will affect the voltage level of the DC bus, the DC bus battery is usable to energize the DC bus, and wherein the control unit (52) is further configured to interconnect the DC buses by closing said one or more switches if one of the DC buses experiences a drop in voltage level.

13. An electric aircraft comprising an energy distribution system according to any of claims 1-12.

14. A method for controlling an energy distribution system according to any of claims 1-11, wherein the method comprises the steps to:
- monitor (62) the status of DC/DC converters converting the first DC voltage to the second DC voltage when energizing the DC bus;
- if the DC/DC converters are operational (63), then charge (64) each DC bus battery via the DC bus; and
- if one DC bus is non-energized (65), then connect (69) the DC bus battery to energize the DC bus, wherein at least one DC/DC converter is detected to malfunction (65), and the method further comprises the step to connect an energized DC bus with a non-energized DC bus by closing (66) one or more switches.

## Patentansprüche

1. Ein Energieverteilungssystem (20; 30; 40; 50) für ein Flugzeug, wobei das Energieverteilungssystem (20; 30; 40; 50) Folgendes beinhaltet:
mindestens zwei elektrische Antriebsstrangeinheiten (A-D), wobei jede Antriebsstrangeinheit eine Antriebseinheit (1) beinhaltet, die von einer oder mehreren Energiespeichereinheiten (13) des Energieverteilungssystems betrieben wird, wobei jede Energiespeichereinheit konfiguriert ist, um eine erste Gleichstromspannung, DC-Spannung, über eine DC-Verbindung an die Antriebseinheit zu liefern, wobei die erste DC-Spannung, die von der Energiespeichereinheit (13) in jeder Antriebsstrangeinheit geliefert wird, in Abhängigkeit vom Ladezustand und dem Leistungsbedarf von der verbundenen Antriebseinheit (1) variiert;
mindestens eine Wandlereinheit (25; 35-1, 35-2; 45-1, 45-2), die konfiguriert ist, um einen DC-Bus (16-1, 16-2; 19-1, 19-2) des Energieverteilungssystems zu bestromen, wobei der DC-Bus (16-1, 16-2; 19-1, 19-2) eine zweite DC-Spannung aufweist, die niedriger ist als die erste DC-Spannung, die von jeder jeweiligen Energiespeichereinheit (13) bereitgestellt wird, wobei jede Wandlereinheit der mindestens einen Wandlereinheit (25; 35-1, 35-2; 45-1, 45-2) Folgendes beinhaltet:
- eine DC/DC-Wandleranordnung (21; 41-1, 41-2), die konfiguriert ist, um die erste DC-Spannung von mindestens einer der Energiespeichereinheiten (13) in die zweite DC-Spannung auf dem DC-Bus (16-1, 16-2; 19-1, 19-2) umzuwandeln; und
- eine DC-Bus-Batterie (22; 42) mit einer nominalen Betriebs-DC-Spannung der zweiten DC-Spannung;
wobei der DC-Bus (16-1, 16-2; 19-1, 19-2) Energie zum Laden der DC-Bus-Batterie (22; 42) bereitstellt, wenn er von der mindestens einen Energiespeichereinheit (13) bestromt wird, und die DC-Bus-Batterie (22; 42) Energie an den DC-Bus (16-1, 16-2; 19-1, 19-2) liefert, wenn die mindestens eine Energiespeichereinheit den DC-Bus (16-1, 16-2; 19-1, 19-2) nicht bestromt,
wobei die mindestens eine Wandlereinheit eine erste Wandlereinheit (35-1; 45-1) und eine zweite Wandlereinheit (35-2; 45-2) beinhaltet, wobei jede Wandlereinheit konfiguriert ist, um einen separaten DC-Bus (16-1, 16-2; 19-1, 19-2) zu bestromen, und wobei die separaten DC-Busse (16-1, 16-2; 19-1, 19-2) konfiguriert sind, um über einen oder mehrere Schalter (33-1, 33-2; 48-1, 48-2) verbunden zu werden.

2. Energieverteilungssystem gemäß Anspruch 1, das ferner einen externen Eingang (26; 46) beinhaltet, der konfiguriert ist, um dem DC-Bus (16-1, 16-2; 19-1, 19-2) jeder Wandlereinheit (25, 35-1, 35-2; 45-1, 45-2) über einen oder mehrere Schalter (24, 33-1, 33-2; 44, 48-1, 48-2) Energie bereitzustellen.

3. Energieverteilungssystem gemäß einem der Ansprüche 1-2, wobei jede DC/DC-Wandleranordnung (21; 41-1, 41-2) einen separaten DC/DC-Wandler (a-d; a'-d') für jede der mindestens einen Energiespeichereinheit (13) beinhaltet.

4. Energieverteilungssystem gemäß Anspruch 3, wobei jede der mindestens einen Energiespeichereinheit (13) mit zwei unabhängigen DC/DC-Wandleranordnungen (21) verbunden ist.

5. Energieverteilungssystem gemäß einem der Ansprüche 1-4, wobei die DC-Bus-Batterie (22; 42) durch eine Batterieverwaltungseinheit (23; 43) gesteuert wird, die durch die DC-Bus-Batterie (22; 42) betrieben wird.

6. Energieverteilungssystem gemäß Anspruch 5, wobei die DC-Bus-Batterie (22; 42) konfiguriert ist, um den DC-Bus (16-1, 16-2; 19-1, 19-2) beim Starten des Flugzeugs zu betreiben.

7. Energieverteilungssystem gemäß einem der Ansprüche 1-4, wobei jede Antriebseinheit einen DC/AC-Wechselrichter, einen Elektromotor und einen Propeller (12) beinhaltet.

8. Energieverteilungssystem gemäß einem der vorhergehenden Ansprüche, wobei die DC/DC-Wandleranordnung (21) konfiguriert ist, um die erste DC-Spannung von jeder der Energiespeichereinheiten (13) in die zweite DC-Spannung auf dem DC-Bus (16-1, 16-2) umzuwandeln.

9. Energieverteilungssystem gemäß einem der Ansprüche 1-8, wobei jede Antriebseinheit (1) von einer Energiespeichereinheit (13) betrieben wird.

10. Energieverteilungssystem gemäß einem der Ansprüche 1-8, wobei jede Antriebseinheit (1) von den Energiespeichereinheiten (13) über einen gemeinsamen DC-Bus (51) betrieben wird.

11. Energieverteilungssystem gemäß einem der vorhergehenden Ansprüche, das ferner eine Steuereinheit (52) beinhaltet, die für Folgendes konfiguriert ist:
- Überwachen des Status von DC/DC-Wandlern, die die erste DC-Spannung in die zweite DC-Spannung umwandeln, wenn der DC-Bus bestromt wird;
- wenn die DC/DC-Wandler in Betrieb sind, dann Laden jeder DC-Bus-Batterie über den DC-Bus; und
- wenn ein DC-Bus nicht bestromt wird, dann Verbinden der DC-Bus-Batterie, um den DC-Bus zu bestromen,
wobei detektiert wird, dass mindestens ein DC/DC-Wandler eine Fehlfunktion aufweist, und die Steuereinheit ferner konfiguriert ist, um einen bestromten DC-Bus mit einem nicht bestromten DC-Bus durch Schließen des einen oder der mehreren Schalter zu verbinden.

12. Energieverteilungssystem gemäß einem der vorhergehenden Ansprüche, wobei das Energieverteilungssystem ferner eine Steuereinheit (52) beinhaltet, die konfiguriert ist, um den Status von DC/DC-Wandlern zu überwachen und den Spannungspegel jedes DC-Busses über einen Spannungssensor abtastet, wobei, wenn einer der Spannungssensoren einen Abfall des Spannungspegels anzeigt oder der überwachte Status der DC/DC-Wandler den Spannungspegel des DC-Busses beeinflussen wird, die DC-Bus-Batterie verwendbar ist, um den DC-Bus zu bestromen, und wobei die Steuereinheit (52) ferner konfiguriert ist, um die DC-Busse durch Schließen des einen oder der mehreren Schalter zu verbinden, wenn einer der DC-Busse einen Abfall des Spannungspegels erfährt.

13. Ein elektrisches Flugzeug, das ein Energieverteilungssystem gemäß einem der Ansprüche 1-12 beinhaltet.

14. Ein Verfahren zum Steuern eines Energieverteilungssystems gemäß einem der Ansprüche 1-11, wobei das Verfahren die folgenden Schritte beinhaltet:
- Überwachen (62) des Status von DC/DC-Wandlern, die die erste DC-Spannung in die zweite DC-Spannung umwandeln, wenn der DC-Bus bestromt wird;
- wenn die DC/DC-Wandler in Betrieb sind (63), dann Laden (64) jeder DC-Bus-Batterie über den DC-Bus; und
- wenn ein DC-Bus nicht bestromt wird (65), dann Verbinden (69) der DC-Bus-Batterie, um den DC-Bus zu bestromen, wobei detektiert wird, dass mindestens ein DC/DC-Wandler eine Fehlfunktion aufweist (65), und das Verfahren ferner den Schritt des Verbindens eines bestromten DC-Busses mit einem nicht bestromten DC-Bus durch Schließen (66) eines oder mehrerer Schalter beinhaltet.

## Revendications

1. Un système de distribution d'énergie (20 ; 30 ; 40 ; 50) pour un aéronef, le système de distribution d'énergie (20 ; 30 ; 40 ; 50) comprenant :
au moins deux unités de groupe motopropulseur électrique (A-D), chaque unité de groupe motopropulseur comprend une unité de propulsion (1) alimentée par une ou plusieurs unités de stockage d'énergie (13) du système de distribution d'énergie, chaque unité de stockage d'énergie est configurée pour apporter une première tension en courant continu, CC, par l'intermédiaire d'une connexion CC à l'unité de propulsion, la première tension CC apportée par l'unité de stockage d'énergie (13) dans chaque unité de groupe motopropulseur varie en fonction de l'état de charge et de la demande d'alimentation provenant de l'unité de propulsion (1) connectée ;
au moins une unité de convertisseur (25 ; 35-1, 35-2 ; 45-1, 45-2) configurée pour mettre sous tension un bus CC (16-1, 16-2 ; 19-1, 19-2) du système de distribution d'énergie, le bus CC (16-1, 16-2 ; 19-1, 19-2) ayant une deuxième tension CC inférieure à la première tension CC fournie à partir de chaque unité de stockage d'énergie (13) respective, chaque unité de convertisseur de l'au moins une unité de convertisseur (25 ; 35-1, 35-2 ; 45-1, 45-2) comprend :
- un agencement de convertisseurs CC/CC (21 ; 41-1, 41-2) configuré pour convertir la première tension CC provenant d'au moins une des unités de stockage d'énergie (13) en la deuxième tension CC sur le bus CC (16-1, 16-2 ; 19-1, 19-2) ; et
- une batterie de bus CC (22 ; 42) avec une tension CC de fonctionnement nominale de la deuxième tension CC ;
dans lequel le bus CC (16-1, 16-2 ; 19-1, 19-2) fournit de l'énergie pour charger la batterie de bus CC (22 ; 42) lorsqu'il est mis sous tension à partir de l'au moins une unité de stockage d'énergie (13), et la batterie de bus CC (22 ; 42) apporte de l'énergie au bus CC (16-1, 16-2 ; 19-1, 19-2) lorsque l'au moins une unité de stockage d'énergie ne parvient pas à mettre sous tension le bus CC (16-1, 16-2 ; 19-1, 19-2),
dans lequel l'au moins une unité de convertisseur comprend une première unité de convertisseur (35-1 ; 45-1) et une deuxième unité de convertisseur (35-2 ; 45-2), chaque unité de convertisseur est configurée pour mettre sous tension un bus CC (16-1, 16-2 ; 19-1, 19-2) distinct, et
dans lequel les bus CC (16-1, 16-2 ; 19-1, 19-2) distincts sont configurés pour être connectés par l'intermédiaire d'un ou de plusieurs commutateurs (33-1, 33-2 ; 48-1, 48-2).

2. Le système de distribution d'énergie selon la revendication 1, comprenant en outre une entrée externe (26 ; 46) configurée pour fournir de l'énergie au bus CC (16-1, 16-2 ; 19-1, 19-2) de chaque unité de convertisseur (25, 35-1, 35-2 ; 45-1, 45-2) par l'intermédiaire d'un ou de plusieurs commutateurs (24, 33-1, 33-2 ; 44, 48-1, 48-2).

3. Le système de distribution d'énergie selon n'importe lesquelles des revendications 1 à 2, dans lequel chaque agencement de convertisseurs CC/CC (21 ; 41-1, 41-2) comprend un convertisseur CC/CC (a-d ; a'-d') distinct pour chacune de l'au moins une unité de stockage d'énergie (13).

4. Le système de distribution d'énergie selon la revendication 3, dans lequel chacune de l'au moins une unité de stockage d'énergie (13) est connectée à deux agencements de convertisseurs CC/CC (21) indépendants.

5. Le système de distribution d'énergie selon n'importe lesquelles des revendications 1 à 4, dans lequel la batterie de bus CC (22 ; 42) est commandée par une unité de gestion de batterie (23 ; 43) alimentée par la batterie de bus CC (22 ; 42).

6. Le système de distribution d'énergie selon la revendication 5, dans lequel la batterie de bus CC (22 ; 42) est configurée pour allumer le bus CC (16-1, 16-2 ; 19-1, 19-2) lors du démarrage de l'aéronef.

7. Le système de distribution d'énergie selon n'importe lesquelles des revendications 1 à 4, dans lequel chaque unité de propulsion comprend un onduleur CC/CA, un moteur électrique, et une hélice (12).

8. Le système de distribution d'énergie selon n'importe lesquelles des revendications précédentes, dans lequel l'agencement de convertisseurs CC/CC (21) est configuré pour convertir la première tension CC provenant de chacune des unités de stockage d'énergie (13) en la deuxième tension CC sur le bus CC (16-1, 16-2).

9. Le système de distribution d'énergie selon n'importe lesquelles des revendications 1 à 8, dans lequel chaque unité de propulsion (1) est alimentée par une unité de stockage d'énergie (13).

10. Le système de distribution d'énergie selon n'importe lesquelles des revendications 1 à 8, dans lequel chaque unité de propulsion (1) est alimentée par les unités de stockage d'énergie (13) par l'intermédiaire d'un bus CC commun (51).

11. Le système de distribution d'énergie selon l'une quelconque des revendications précédentes, comprenant en outre une unité de commande (52) configurée pour :
- surveiller l'état des convertisseurs CC/CC convertissant la première tension CC en la deuxième tension CC lors de la mise sous tension du bus CC ;
- si les convertisseurs CC/CC sont opérationnels, charger alors chaque batterie de bus CC par l'intermédiaire du bus CC ; et
- si un bus CC n'est pas mis sous tension, connecter alors la batterie de bus CC pour mettre sous tension le bus CC,
dans lequel au moins un convertisseur CC/CC est détecté comme étant défaillant, et l'unité de commande est en outre configurée pour connecter un bus CC mis sous tension à un bus CC non mis sous tension en fermant lesdits un ou plusieurs commutateurs.

12. Le système de distribution d'énergie selon l'une quelconque des revendications précédentes, le système de distribution d'énergie comprenant en outre une unité de commande (52) configurée pour surveiller l'état des convertisseurs CC/CC et détecter le niveau de tension de chaque bus CC par l'intermédiaire d'un capteur de tension, dans lequel si n'importe lesquels des capteurs de tension indiquent une chute de niveau de tension, ou l'état surveillé des convertisseurs CC/CC affectera le niveau de tension du bus CC, la batterie de bus CC est utilisable pour mettre sous tension le bus CC, et dans lequel l'unité de commande (52) est en outre configurée pour connecter entre eux les bus CC en fermant lesdits un ou plusieurs commutateurs si l'un des bus CC subit une chute de niveau de tension.

13. Un aéronef électrique comprenant un système de distribution d'énergie selon n'importe lesquelles des revendications 1 à 12.

14. Un procédé pour la commande d'un système de distribution d'énergie selon n'importe lesquelles des revendications 1 à 11, le procédé comprenant les étapes consistant à :
- surveiller (62) l'état des convertisseurs CC/CC convertissant la première tension CC en la deuxième tension CC lors de la mise sous tension du bus CC ;
- si les convertisseurs CC/CC sont opérationnels (63), charger (64) alors chaque batterie de bus CC par l'intermédiaire du bus CC ; et
- si un bus CC n'est pas mis sous tension (65), connecter (69) alors la batterie de bus CC pour mettre sous tension le bus CC, dans lequel au moins un convertisseur CC/CC est détecté comme étant défaillant (65), et le procédé comprenant en outre l'étape consistant à connecter un bus CC mis sous tension à un bus CC non mis sous tension en fermant (66) un ou plusieurs commutateurs.
